# EUROPEAN PATENT SPECIFICATION

(11) **EP 2 944 172 B1**
(45) Date of publication and mention of the grant of the patent: **06.05.2020**
(21) Application number: 13859965.9
(22) Date of filing: 27.11.2013
(51) Int. Cl.: A01B 71/04

(54) **SPLIT AXLE, AXLE-HUB UNIT AND USE THEREOF**
GETEILTE ACHSE, ACHSENNABENEINHEIT UND VERWENDUNG DAVON
AXE EN DEUX PARTIES, ENSEMBLE AXE-MOYEU ET LEUR UTILISATION

(30) Priority: 04.12.2012 BR 102012309149
(43) Date of publication of application: 18.11.2015
(73) Proprietor: Birck, Ademar, CEP: 89.120-000 (BR)
(72) Inventor: Birck, Ademar, CEP: 89.120-000 (BR)
(74) Representative: V.O.
(86) International application number: PCT/BR2013/000512
(87) International publication number: WO 2014/085887

(56) References cited:
- EP-A2- 2 364 582
- WO-A1-02/19791
- US-A- 232 432
- US-A- 2 698 565
- US-A- 3 969 029
- US-A- 3 969 029
- US-A- 5 904 107

## Description

### Field of the invention

The present invention relates to a shaft-hub assembly according to claim 1. Furthermore, the present invention refers to the use of said shaft-hub assembly in cutting disks of planters and subsoilers, as well as wheels of planters.

### Background of the Invention

Machines and implements play an important role in agriculture. Thirty years after its introduction in the national territory, the no-tillage system was consolidated as a conservation technology widely accepted among farmers, with systems adapted to different regions and different technological levels, from large to small farmers using animal traction.

The seeder-fertilizer or no-tillage planters are machines that perform the implementation of annual crops by sowing on land wherein no periodical preparation of the soil was performed and with the presence of vegetal coverage. There is a minimum required mobilization of soil, only on sowing rows. Thus, it is possible to sowing after the harvest of the previous crop. Usually the units of seeders are combined to fertilizing units, hence the name seeder-fertilizer.

The no-tillage, defined as the process of sowing in soil not revolved, in which the seed is placed in grooves or pits, with enough width and depth for the proper coverage and contact of the seeds with the earth, is today understood as a system with the following grounds, that interact:
- Elimination/reduction of tillage operations. As a result, it avoids the surface sealing, due to the impact of raindrops; consequently, reduces the surface seepage and increases infiltration, drastically reducing erosion. There is more maintenance of the aggregate stability, improving the soil structure by preventing subsurface compaction. It reduces losses of water by evaporation, increasing the availability of water for plants, the biological activity of the soil and the maintenance of organic matter of the soil.
- Use of herbicides for weed control. The use of desiccant herbicides means replacing the mechanical energy of soil preparation for the chemical energy (herbicide). It is essential the use of integrated weed control methods, such as the use of coverage crops, crop rotation and specific herbicides.
- Formation and maintenance of mulch. It provides protection against the impact of rain drops, reducing surface runoff, sediment transport and hence erosion. It also acts on the soil protection against the effect of sunlight, reducing evaporation, the soil temperature and the thermal amplitude of the soil, and against the action of winds. With its decomposition, it incorporates organic matter to the soil, required for a larger and richer microbial activity, which allows greater nutrient recycling. In addition, it aids in weed control, by suppressing or allelopathic effect.

A precision seeder consists of chassis or tool holder bar, engaging and coupling to the tractor system, transportation system, containers for seed and fertilizer, and driving and transmission system, systems for dosage and distribution of seeds and fertilizer, sowing units, line markers and stirrups. The sowing units are formed by vegetation cutting unit, groove openers for fertilizer, groove openers for seed, depth control system of grooves for seeds, groove grounding system and compacting system of soil over seeds.

The disks cut straw and open a groove on which other components work. The most commonly used are straight, with diameters between 18" and 20".

The larger is the diameter, the greater will be the force necessary for them to penetrate the soil, because of their larger contact area. However, they have the advantage of passing on vegetation and have lower bushing problems.

The cutting blades are designed and should be regulated only for cutting straw, not exceeding a depth of more than 6 cm. Preferably, they should be provided with lateral movements, besides vertical adjustments. The deeper, the greater the unwanted mobilization of the soil. Moreover, the excess pressure causes the disk to only push the straw to the bottom of the groove, does not cutting the plant material adequately and causing the "basketing" of the seeds. The use of cutting disks in "zig zag" also helps preventing bushings; the greater the mismatch of the lines, the greater is the flow of straw between the grooves. A shaft-hub assembly is known from US3969029.

Document US 2012/0141199 A1 document, filed on December 2, 2010, by Shanghai Genius Advanced Material CO LTD, and entitled "Shaft Connection Assembly", describes a set for threaded connection of shafts in order to transfer torque between two shafts, including a hub and a rim. The hub includes a flange part and a sleeve part, the sleeve part having a plurality of sleeve segments formed by longitudinal cuts along the length of the sleeve part so that when the rim is linearly forced, axially outwardly of the flange part, the sleeve segments exert a clamping force on each of the two axes disposed within a passage formed by the hub. The clamping force prevents the relative movement of the first shaft relative to the second when the shafts are rotated around a common axis. This document presents a union scheme by means of a thread that could be adjustable, but there is no information about the existence of rollers inside, not even one can check its applicability for cutting disks of planters and subsoilers.

Document MU 8402706-1, filed on March 2, 1993, by Marchesan Implements and Agricultural Machinery Tatu SA, and entitled "Cutting disk used in small and medium-size machines for no-tillage", describes a cutting disk used in small and medium-size machines for no-tillage comprising an integral support (01) defined by superior double vertical segment (02), intermediate pivoting (03), double inferior re-curved segment (04) for receiving the cutting disk (05) intermediate fastener element (06) provided with horizontal (06-A) and vertical (06-B) bushings, assembly articulation axes (07) and (08) to the front coupling (09) and rear coupling (10) for fastening the cutting disk (01) to the chassis (11) of the agricultural planter machine. A workload set of the disks for cutting and monitoring the irregularities of the ground is defined by the arrangement and constructive form of anchoring of traction spring (12) in a horizontal plane and provided with adapters (13) provided with helical conformation for insertion along with the ends wires of the traction spring (12) with screw (16) of threaded length to adjust the tension load of the traction spring (12) according to the field conditions.

Document EP 0555745, filed on March 25, 2004, by Amanozen-Werke H. Dreyer GmbH & Co. Kg, and entitled "Drill machine", describes a sower having a structure in which the disks (1) of the coulters of seeds are arranged by means of a retention arm (3), the disks (1), respectively, being rotatably mounted on the retention arms (3) via a rotary roller having an shaft, an extractor (6, 16) being arranged by means of a support (4, 15) on each side of the disk (1), the support (4) of the first separator (6), arranged on the side of the disk (1) in which the retention arm (3) is situated, being fastened to the mounting (14) of the rotary roller and/or retention arm.

The international patent application WO 2012/055611, filed on August 30, 2011 by Robert Bosch GmbH, and entitled "Arrangement for transmitting torque between the shaft and the hub," describes a set (100) for transmitting torque between a shaft (48) and a hub (102), wherein the hub (102) has at least approximately the inner geometry of an equilateral polygon with n sides (122), whose lateral surfaces are supported against an engagement part (104), which is of circular cross-section, the shaft (48), and wherein the shaft has at least one conductor part (108) which is rotatably connected with respect to the engagement part assembly (104) and extending toward a niche (124) of the polygon of n sides (122).

U.S. Patent 4,949,889, filed on July 14, 1983 by Reliance Electric Company, and entitled: "Shaft bushing and hub assembly" discloses a set of bearing and hub for the mounting of pulleys, sprockets, gears, joints and similar machines elements on a shaft, in which two types of conical bearing are used, the bearings having bodies with a single identical inclination used as a single hub, which is supported by both bearings. One of the bearings comprises an annular flange extending radially at the large end of the conical body and the other bearing has no flange. The screw holes and sliding holes are provided in the flange and in the interface of the bearing and of the hub for fastening the selected bearing to the hub for mounting the machine element over the shaft with screws to securely fasten the bearings on the shaft and the bore of the hub.

The Brazilian patent application PI 0900993-0 filed on April 7, 2009, by Deere & Company and entitled "agricultural machine", describes an agricultural machine 10 that includes a set of disk blade with a hub and a blade disk mounted on the hub. The rotor blade is deflectable by terrain forces in an area outside of the hub. A scraper assembly includes a mounting, a scraper blade and a hinge that interconnects the pivot to the scrapper blade on the mounting. The hinge has an axis of rotation that passes through a point generally in the bottom of the perimeter of the hub, or close to it, and generally coincident with the disk blade.

U.S. Patent 6,257,678, filed on September 23, 1999 by Meritor Heavy Vehicle Systems, LLC, and entitled "Vehicle hub having reduced lubricant cavity", describes a vehicle hub comprising a body, usually cylindrical, which extends axially to form an inner seat of the roller, a seat of the outer bearing and between them a lubricant cavity. The hub is preferably chosen as an integral component from a ductile iron. A plurality of integral open ribs connects the body to a flange which extends radially. The ribs form an open space between the body and the ribs. The open structure of the ribs provides cooling for the bearings and lubricant, while reducing the weight without sacrificing the strength and rigidity of the hub. The cavity of the lubricant has a reduced diameter, which reduces the volume of lubricating medium required to fill the cavity and minimizes the centrifuge effect acting upon the medium.

### Summary of the Invention

It is an object of the present invention to provide a shaft-hub assembly comprising:
1) a split shaft with adjustment setting and comprising a first part, a second part and a central sleeve of cylindrical section, wherein the first part and the second part comprise grooves on their outer surface and the central sleeve comprises grooves on its inner surface, wherein the diameter of the cylindrical section of said first part and second part of the shaft is equal, and the diameter of the inner cylindrical section of said sleeve is greater the diameter of the cylindrical section of said first part and second part of the shaft;
2) a cylindrical hub comprising two couplable parts, wherein said hub comprises a central portion of cylindrical section which extends axially to form an inner seat, wherein in one of the parts there are inserted and mounted the other internal parts forming shaft-hub assembly and the other part of the hub is used to fasten a cutting disk;
3) at least two tapered rollers;
4) at least two retainers to retain a lubricant grease, made of rubber;
5) at least two dust covers, made of felt and attached to a washer, which are used to block dust from entering the internal lubricated part of the hub; and
6) at least two rings or latches, fitted at the ends of the two sides of the hub, to prevent the escape of any internal parts,
wherein said cylindrical hub further comprises a perforated section.

It is also an object of the present invention to provide the use of the shaft-hub assembly in cutting disks of planters and/or subsoilers.

### Brief Description of Drawings

The structure and operation of the present invention, together with further advantages thereof may be better understood by reference to the accompanying drawings and the following descriptions:

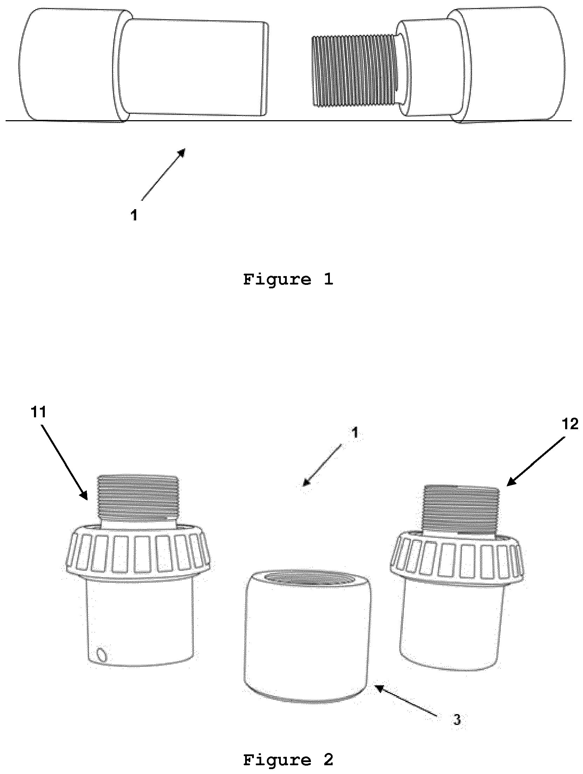

Figure 1 shows one possible configuration of the split shaft of the present invention.
Figure 2 illustrates a second possible configuration for the split shaft of the present invention, wherein parts of said shaft are connected by means of a sleeve.

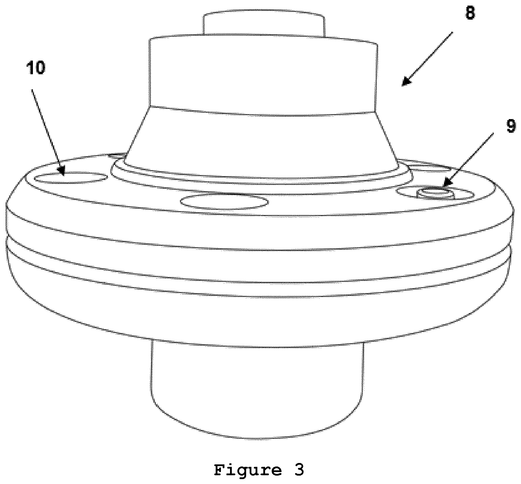

Figure 3 shows a side view of the cylindrical hub comprising two couplable parts.

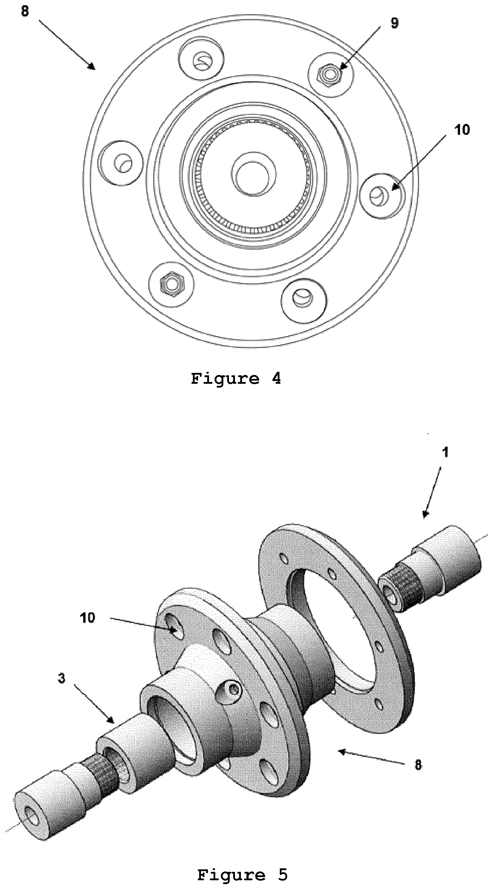

Figure 4 shows a top view of the cylindrical hub comprising two couplable parts.
Figure 5 shows a schematic representation of the mounting of the shaft-hub assembly.

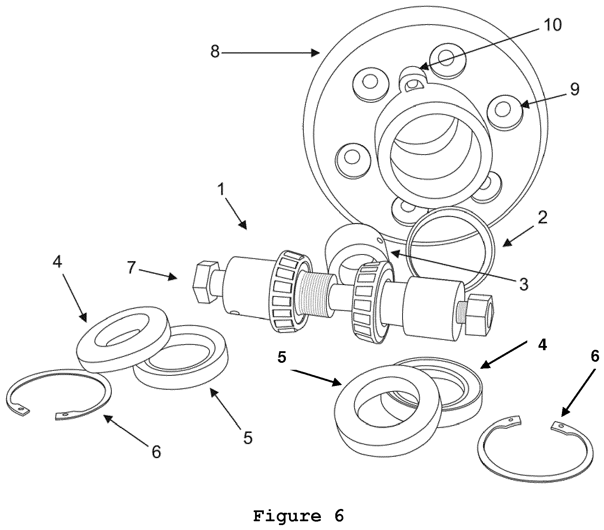

Figure 6 shows the constituent parts of the shaft-hub assembly.

### Detailed Description of the Invention

Although the present invention may be susceptible to various embodiments, there are shown in the drawings and in the following detailed discussion, preferred embodiments with the understanding that the present disclosure is to be considered as an exemplification of the principles of the invention and is not intended to limit the present invention to what is illustrated and described herein.

The invention relates to a shaft-hub assembly, comprising :
1) a split shaft with adjustment setting comprising a first part, a second part and a central sleeve (3) of cylindrical section, wherein the first part and the second part comprises grooves on its outer surface and the central sleeve (3) comprises grooves on its inner surface, wherein the diameter of the cylindrical section of said first part and second part of the shaft are equal, and the diameter of the inner cylindrical section of said sleeve 3 is greater than the diameter of cylindrical section of said first part and second part of the shaft so as to provide the threading of said first and second parts of the shaft at each end of the sleeve 3;
2) a cylindrical hub 8 comprising two couplable parts, wherein said hub comprises a central portion of cylindrical section which extends axially to form an inner seat, wherein one of the parts are inserted and assembled to other internal parts that form the shaft-hub connection, and subsequently the other part of the hub is used for fastening the cutting disk. The hub further comprises a perforated section 10 which allows lubricant insertion across its whole inner surface, facilitating the rolling and minimizing wear. Hub parts are made of cast iron. The two parts of the cylindrical hub 8 are coupled by inserting from approximately six screws 9 around the perforations existing in both sides;
3) at least two tapered rollers 2;
4) at least two retainers 5 for retaining the lubricant grease, made of rubber;
5) at least two dust covers 4, made of felt and attached to a washer, which are used to block out dust in the lubricated inner part of the hub; and
6) at least two rings or latches 6, fitted at the ends on both sides of the hub, to prevent escape of any internal parts.

Compared to the prior art, the main differences of the shaft-hub assembly of the present invention reside in the split shafts, which have adjustment setting, in the type of rollers that are used and in the use of dust cover.

By setting adjustment of the split shaft of the present invention, the durability and strength of the product will be much higher, allowing the user to notice the gap that will eventually occur, and make the necessary adjustments, avoiding the rupture of the hub and of the internal components, which would not be possible to make with the currently existing products on the market. The tapered rollers, also more resistant, are used to monitor and complement the durability of the product, since ball rollers do not meet the requirements for monitoring the progress brought by the invention. As the dust covers, these are extremely useful for inhibiting dust and other impurities in the lubricated part of the product, avoiding the wear caused by dryness originating from the dirt (dust), which also adds to its durability.

The assembly of the entire assembly begins by inserting the covers of the rollers in the inner part of the both sides of the hub, fastening them by pressure to the point limited by a shoulder; then, the roller should be placed in one of the sides of the shaft, fitting it under pressure to the existing limit; later, this side of the shaft, already with the fastened roller, must be threaded in the central sleeve 3 until it touches the taper roller; then it must be placed the other roller of the second part of the shaft, likewise, by pressure, to the existing limit; in sequence, the part of the shaft must be inserted (with the roller and the sleeve 3) on one of the sides of the hub, by placing then the other part of the shaft (with the roller) by the other side of the hub, being threaded in the sleeve 3, which will make the setting and adjustment; continuing the mounting, the retainer, the dust covers and rings/latches should be placed on both sides of the hub, necessarily in this sequence. Then, the hub is ready, with the use of its other part, for fastening of the cutting disk of planters and subsoilers, with the use of screws 7. At the end, after the complete mounting of the hub in the cutting disk, all the assembly shall be fastened on the stand of the planter or subsoiler, using a long screw that crosses the whole assembly and is fastened by a nut.

The setting is made by the split shaft, wherein in case of looseness in the rollers, causing an instability in the cutting disk, and consequently, in the whole assembly, the user can simply proceed with the adjustment/setting, returning the product stability, preventing its wear and increasing its durability.

The possibility of setting and adjustment as well as the durability of the product, are the great advantages and the major difference of this product over those existing in the market, since the user will avoid constant ruptures due to the setting and strength of the equipment, reducing costs and optimizing time use of their implements, which need not to stand still for sequential exchanges.

The application of the shaft-hub assembly can be made in cutting disks of any planters and/or subsoilers currently in the market. Additionally, the shaft-hub assembly of the present invention can be used separately in wheels of planters.

Thus, although only some embodiments of the invention have been shown, it will be understood that various omissions, substitutions and changes may be made by one skilled expert. The described embodiments are to be considered only as illustrative and not restrictive.

It is also necessary to understand that the drawings are not necessarily to scale, but they are only conceptual nature.

## Claims

1. A shaft-hub assembly, comprising:
1) a split shaft (1) with adjustment setting and comprising a first part (10), a second part (11) and a central sleeve (3) of cylindrical section, wherein the first part (10) and the second part (11) comprise grooves on their outer surface and the central sleeve (3) comprises grooves on its inner surface, wherein the diameter of the cylindrical section of said first part (10)) and second part (11) of the shaft (1) is equal, and the diameter of the inner cylindrical section of said sleeve (3) is greater the diameter of the cylindrical section of said first part (10) and second part (11) of the shaft (1);
2) a cylindrical hub (8) comprising two couplable parts, wherein said hub (8) comprises a central portion of cylindrical section which extends axially to form an inner seat, wherein in one of the parts there are inserted and assembled the inner parts that form the shaft-hub assembly and the other part of the hub is used to fasten a cutting disk;
3) at least two tapered rollers (2);
4) at least two retainers (5), to retain a lubricant grease, made of rubber;
5) at least two dust covers (4), made of felt and attached to a washer, which are used to block dust from entering the internal lubricated part of the hub; and
6) at least two rings or latches (6), fitted at the ends of the two sides of the hub, to prevent the escape of any internal parts,
wherein said cylindrical hub (8) further comprises a perforated section (10).

2. The shaft-hub assembly according to claim 1, wherein the parts of said hub (8) are made of cast iron.

3. The shaft-hub assembly according to claim 1, wherein the two parts of the cylindrical hub (8) are coupled by inserting screws (9) in the perforations in both parts of said hub (8).

4. The shaft-hub assembly according to claim 1, wherein the split shaft (1) is made of steel.

5. Use of the shaft-hub assembly according to claim 1, **characterized in that** it is made in wheels of planters.

6. Use of the shaft-hub assembly according to claim 1, **characterized in that** it is made on cutting disks of planters and/or subsoilers.

## Patentansprüche

1. Welle-Nabe-Baugruppe, umfassend:
1) eine geteilte Welle (1) mit Verstelleinstellung und umfassend einen ersten Teil (10), einen zweiten Teil (11) und eine zentrale Hülse (3) mit zylindrischem Querschnitt, wobei der erste Teil (10) und der zweite Teil (11)) an ihrer Außenfläche Nuten aufweisen und die zentrale Hülse (3) an ihrer Innenfläche Nuten aufweist, wobei der Durchmesser des zylindrischen Abschnitts des ersten Teils (10) und des zweiten Teils (11) der Welle (1) gleich ist und der Durchmesser des inneren zylindrischen Abschnitts der Hülse (3) größer ist als der Durchmesser des zylindrischen Abschnitts des ersten Teils (10) und des zweiten Teils (11) der Welle (1);
2) eine zylindrische Nabe (8) mit zwei koppelbaren Teilen, wobei die Nabe (8) einen zentralen Abschnitt eines zylindrischen Abschnitts aufweist, der sich axial erstreckt, um einen inneren Sitz zu bilden, wobei in einen der Teile die inneren Teile eingesetzt und zusammengebaut sind, die die Welle-Nabe-Baugruppe bilden, und der andere Teil der Nabe zur Befestigung einer Trennscheibe dient;
3) wenigstens zwei Kegelrollen (2);
4) wenigstens zwei Halterungen (5) zum Halten eines Schmierfetts aus Gummi;
5) wenigstens zwei Staubschutzkappen (4) aus Filz, die an einer Unterlegscheibe befestigt sind und dazu dienen, das Eindringen von Staub in den innen geschmierten Teil der Nabe zu verhindern; und
6) wenigstens zwei Ringe oder Riegel (6), die an den Enden der beiden Seiten der Nabe angebracht sind, um das Entweichen von Innenteilen zu verhindern,
wobei die zylindrische Nabe (8) ferner einen perforierten Abschnitt (10) umfasst.

2. Welle-Nabe-Baugruppe nach Anspruch 1, wobei die Teile der Nabe (8) aus Gusseisen bestehen.

3. Welle-Nabe-Baugruppe nach Anspruch 1, wobei die zwei Teile der zylindrischen Nabe (8) durch Einsetzen von Schrauben (9) in die Perforationen in beide Teile der Nabe (8) gekoppelt sind.

4. Welle-Nabe-Baugruppe nach Anspruch 1, wobei die geteilte Welle (1) aus Stahl besteht.

5. Verwendung der Welle-Nabe-Baugruppe nach Anspruch 1, **dadurch gekennzeichnet, dass** sie in Rädern von Pflanzmaschinen hergestellt ist.

6. Verwendung der Welle-Nabe-Baugruppe nach Anspruch 1, **dadurch gekennzeichnet, dass** sie auf Trennscheiben von Pflanzmaschinen und / oder Tieflockerern hergestellt ist.

## Revendications

1. Ensemble arbre-moyeu, comprenant
1) un arbre en deux parties (1) à réglage d'ajustement et comprenant une première partie (10), une deuxième partie (11) et un manchon central (3) de section cylindrique, dans lequel la première partie (10) et la deuxième partie (11) comportent des rainures sur leur surface externe et le manchon central (3) comprend des rainures sur sa surface interne, dans lequel le diamètre de la section cylindrique de ladite première partie (10) et de ladite deuxième partie (11) de l'arbre (1) est égal, et le diamètre de la section cylindrique intérieure dudit manchon (3) est supérieur au diamètre de la section cylindrique de ladite première partie (10) et de ladite deuxième partie (11) de l'arbre (1);
2) un moyeu cylindrique (8) comprenant deux parties pouvant être accouplées, dans lequel ledit moyeu (8) comprend une partie centrale de section cylindrique qui s'étend axialement pour former un siège intérieur, dans lequel, dans l'une des parties, sont insérées et assemblées les parties intérieures qui forment l'ensemble arbre-moyeu et l'autre partie du moyeu est utilisée pour fixer un disque de coupe;
3) au moins deux rouleaux coniques (2);
4) au moins deux dispositifs de retenue (5), pour retenir une graisse lubrifiante, formée de caoutchouc;
5) au moins deux couvercles anti-poussière (4), en feutre et fixés à une rondelle, qui sont utilisés pour empêcher la poussière de pénétrer dans la partie interne lubrifiée du moyeu; et
6) au moins deux anneaux ou éléments de verrouillage (6), montés aux extrémités des deux côtés du moyeu, pour empêcher l'échappement de toute pièce interne,
dans lequel ledit moyeu cylindrique (8) comprend en outre une section perforée (10).

2. Ensemble arbre-moyeu selon la revendication 1, dans lequel les parties dudit moyeu (8) sont en fonte.

3. Ensemble arbre-moyeu selon la revendication 1, dans lequel les deux parties du moyeu cylindrique (8) sont couplées par insertion de vis (9) dans les perforations des deux parties dudit moyeu (8).

4. Ensemble arbre-moyeu selon la revendication 1, dans lequel l'arbre en deux parties (1) est en acier.

5. Utilisation de l'ensemble arbre-moyeu selon la revendication 1, **caractérisée en ce qu'**elle est réalisée dans des roues de semoirs.

6. Utilisation de l'ensemble arbre-moyeu selon la revendication 1, **caractérisée en ce qu'**elle est réalisée sur des disques de coupe de semoirs et/ou de sous-soleuses.
